# FASCICULE DE BREVET EUROPEEN

(11) **EP 2 515 316 B1**
(45) Date de publication et mention de la délivrance du brevet: **25.04.2018**
(21) Numéro de dépôt: 12354007.2
(22) Date de dépôt: 20.01.2012
(51) Int. Cl.: H01H 33/56, H02B 13/025, H02B 13/01

(54) **Enveloppe isolante d'une cuve logeant un appareil de protection électrique comportant un dispositif de limitation de presiion a l'intérieur de ladite enveloppe, et appareil de protection électrique comportant une telle enveloppe.**
Isoliergehäuse eines Behäters zur Aufnahme eines elektrischen Schutzgeräts mit einer Druckbegrenzungsvorrichtung, und elektrisches Schutzgerät, das ein solches Isoliergehäuse umfasst.
Insulated casing of a tank housing an electrical protection apparatus comprising a device for limiting the pressure inside the casing, and electrical protection apparatus comprising such a casing.

(30) Priorité: 22.04.2011 FR 1101276
(43) Date de publication de la demande: 24.10.2012
(73) Titulaire: Schneider Electric Industries SAS, 92500 Rueil-Malmaison (FR)
(72) Inventeur: Henon, Albin, 38050 Grenoble Cedex 09 (FR); Adams, Mike, 38050 Grenoble Cedex 09 (FR); Moresco, Jean-Claude, 38050 Grenoble Cedex 09 (FR); Herreros, Javier, 38050 Grenoble Cedex 09 (FR)
(74) Mandataire: Colette, Marie-Françoise

(56) Documents cités:
- EP-A2- 0 681 352
- FR-A1- 2 909 230
- FR-A1- 2 944 134
- JP-U- 61 071 939

## Description

La présente invention concerne une enveloppe isolante d'une cuve logeant un appareil de protection électrique, ladite enveloppe comportant un dispositif de limitation de la pression à l'intérieur de ladite enveloppe, ledit dispositif comportant une membrane laquelle, en présence d'un défaut d'arc interne à l'intérieur de ladite enveloppe entraînant une élévation brusque de la pression au-dessus d'une certaine valeur à l'intérieur de ladite enveloppe, est apte à créer, sous l'effet de cette augmentation de pression, un passage à travers la paroi de l'enveloppe, ce passage permettant un dégagement dirigé du plasma généré lors du défaut interne, cette membrane étant de forme sensiblement ellipsoïdale.

L'invention concerne plus particulièrement l'éclatement de la membrane permettant d'évacuer la pression de l'arc interne à l'intérieur d'une cuve isolante contenant un dispositif de sectionnement et de mise à la terre.
Cette membrane doit fonctionner correctement à des températures et pressions de fonctionnement, ou annoncées par le constructeur et doit notamment pouvoir assurer certaines fonctions.
Elle doit assurer l'étanchéité électrique, volumique et hygrométrique aux conditions extrêmes, présenter un niveau de pression de rupture faible et peu dispersé ainsi qu'une section d'évacuation suffisante pour évacuer les gaz chauds générés par l'arc interne et limiter ainsi le niveau de surpression atteint, et enfin assurer que la fissuration d'éclatement soit maîtrisée et n'entraîne pas une détérioration de la cuve qui aurait pour conséquence de ne plus assurer le maintien des phases.

On connaît plusieurs types de technologies utilisées pour réaliser des membranes. On connaît ainsi des membranes rapportées pouvant être métalliques (par exemple sur une cuve en métal) ou non, et des membranes faisant partie intégrante de la cuve et créant une zone de faiblesse. La solution consistant à utiliser des membranes métalliques rapportées sur une cuve métallique permet d'obtenir un bon niveau de rupture de la membrane, mais est très difficile à mettre en oeuvre sur une cuve en Epoxy. Une autre solution consiste à utiliser des membranes en Epoxy intégrées sur des cuves en Epoxy. Dans ce type de solution, la propagation de la fissure est non maîtrisée et le nombre de paramètres intervenant sur la variation de pression rendent ces solutions très dispersées (conditions et paramètres de fabrication, usure des moules, divers types de cas d'arc interne présentant des dynamiques différentes en fonction surtout du niveau de courant de défaut).
En effet, dans cette dernière réalisation, la valeur du rayon de courbure au niveau de la jonction entre la membrane et la paroi dans laquelle elle est fixée est choisie entre 0 et 1 mm, pour obtenir dans cet intervalle les concentrations de contraintes nécessaires.
Or, l'on sait que ces concentrations de contraintes diminuent exponentiellement en fonction du rayon, étant infinies pour un angle droit, décroissant faiblement à partir de 1 mm, cette décroissance étant insignifiante voire nulle à partir d'un rayon de 4mm.
Ainsi, entre 0 et 1mm de rayon de courbure, il s'ensuit une grande variation de concentration de contraintes qui peut conduire à une grande variation du seuil de rupture. Il en résulte que des précautions contraignantes s'imposent au niveau de l'usure du moule pour garantir une valeur précise de ce rayon. En outre, lorsque les rayons sont petits, des défauts de moulage dans cette zone peuvent aussi avoir des effets amplificateurs importants, ce qui accroît aussi la dispersion.
L'une des solutions connues pour résoudre ce problème a été de suivre toutes les cuves en fabrication, afin de vérifier que l'usure du moule n'entraîne pas une variation du rayon de fond suffisante pour augmenter rapidement la pression de rupture, ce qui entraîne un coût élevé de suivi et de maintenance de moule.

On connaît également le document FR 2 944 134 décrivant un dispositif de limitation de la pression à l'intérieure de l'enveloppe isolante d'une cuve logeant un appareil de protection électrique, ledit dispositif comportant une membrane de forme sensiblement ellipsoïdale.

La présente invention résout ces problèmes et propose un dispositif de limitation de la pression permettant d'avoir une bonne maîtrise de la propagation des fissurations afin d'assurer la non dégradation de la cuve et du maintien des phases.
Ce dispositif permet également de réduire fortement les paramètres influents sur la pression de rupture, et d'avoir une section d'évacuation suffisante pour évacuer les gaz du plasma de l'arc interne.

A cet effet, la présente invention a pour objet une enveloppe isolante du genre précédemment mentionné, cette enveloppe étant caractérisée en ce que cette membrane présente un rapport compris entre 1,2 et 1,8, entre le plus grand rayon et le plus petit rayon de courbure, ceci permettant d'obtenir deux points de rupture de la membrane correspondant à deux points de concentration de contraintes maximales, et ainsi une distribution décroissante progressive de contraintes à partir de ces deux points de rupture, le long de cette forme ellipsoïdale.
Ainsi, la fissure se propagera naturellement, sous l'effet du gaz sous pression, de l'intérieur de la membrane vers l'extérieur de la membrane, puis ensuite, ou parallèlement, le long de la ligne de raccordement en partant de deux points de départ de la fissuration.
Cette membrane comporte une collerette par laquelle ladite membrane est rattachée à l'enveloppe, et le rapport entre l'épaisseur de la membrane et l'épaisseur de la collerette est compris entre 3 et 6, de manière à créer une concentration de contraintes au niveau de la ligne de raccordement entre la membrane et la collerette.
Cette concentration de contraintes permet d'obtenir une valeur faible de pression de rupture, ainsi qu'une faible dispersion de cette valeur.
La membrane et la collerette précitées sont venues de matière avec l'enveloppe isolante précitée.
Selon une caractéristique particulière, le plus grand rayon est d'environ 125 mm, tandis que le plus petit rayon est d'environ 80 mm.
Selon une autre caractéristique, la collerette entourant la membrane présente une épaisseur d'environ 24mm, tandis que la membrane présente une épaisseur d'environ 4mm.
Selon une autre caractéristique, la ligne de raccordement entre la membrane et la collerette présente un rayon de courbure minimum de 1mm.

Selon une autre caractéristique, l'enveloppe isolante est configurée pour permettre de fixer la cuve sur la structure d'une cellule moyenne tension par l'intermédiaire de moyens de fixation prévus tout autour de la membrane, de manière que cette membrane ne soit sollicitée mécaniquement que par les variations de pression à l'intérieur de la cuve.
Cette dernière caractéristique permet d'isoler la membrane par rapport aux variations de son environnement.
La présente invention a encore pour objet un appareil de protection électrique comportant un dispositif de mise à la terre, ledit appareil comportant une enveloppe isolante, ladite enveloppe étant une enveloppe isolante selon les caractéristiques précédemment mentionnés prises seules ou en combinaison. Mais d'autres avantages et caractéristiques de l'invention apparaîtront mieux dans la description détaillée qui suit et se réfère aux dessins annexés donnés uniquement à titre d'exemple et dans lesquels :
- La figure 1 est une vue en perspective d'une cuve logeant un appareil de protection électrique moyenne tension, équipée d'un dispositif de limitation de la pression selon l'invention,
- La figure 2 est une vue de face du dispositif de limitation, et

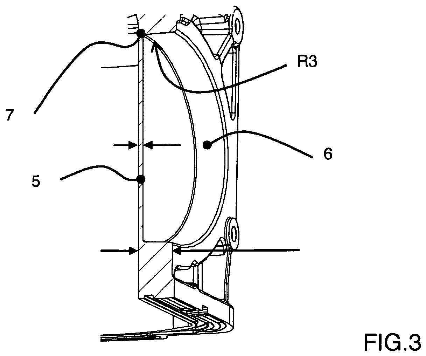

- La figure 3 est une vue partielle en coupe axiale, de ladite cuve.

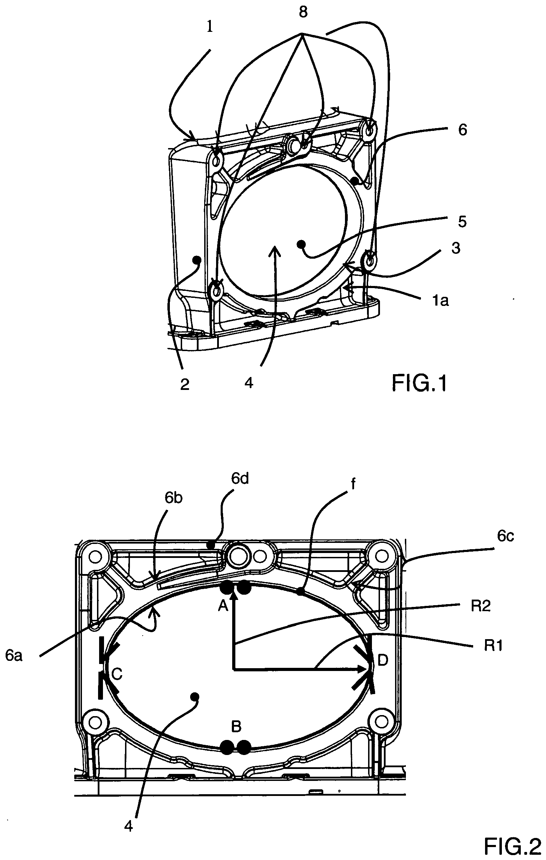

Sur la figure 1, est représentée la cuve 1 d'un appareil de protection électrique tel un interrupteur électrique, comportant un dispositif de mise à la terre. Cet appareil est logé dans une enveloppe isolante 2 sous pression équipée d'un dispositif de limitation 3 de la pression selon l'invention, ce dispositif de limitation comportant une membrane 4 destinée à constituer une zone de fragilité apte à céder avant l'enveloppe elle-même lors de défauts d'arc interne créant des montées brusques en pression à l'intérieur de l'enveloppe 2.
Selon une réalisation particulière de l'invention, cette cuve 1 comporte à l'une 1a de ses extrémités, une paroi d'épaisseur réduite 5, de 6 mm dans cette forme de réalisation décrite, sur laquelle paroi est située une collerette 6 de forme ellipsoïdale venue de matière avec ladite paroi et présentant une épaisseur d'environ six fois celle de la paroi d'épaisseur réduite, c'est-à-dire d'environ 24mm dans cette réalisation particulière. Cette collerette 6 est délimitée par une face intérieure 6a située du côté de l'axe central de l'enveloppe et une face extérieure 6b par laquelle elle est reliée directement à l'enveloppe, par des nervures 6c reliant cette face extérieure 6b à une partie d'enveloppe 6d entourant la collerette 6 et présentant une épaisseur correspondant à celle de la collerette. La partie de paroi entourée par la collerette 6 constitue la membrane précitée.
Ainsi, ce rapport compris entre 3 et 6 entre les épaisseurs de la membrane 4 et celle de la collerette 6, permet d'obtenir une concentration de contraintes au niveau de la ligne de raccordement 7 entre cette collerette et cette membrane.

Tel qu'illustré sur la figure 2, la membrane est en forme d'ellipse, dont le rayon le plus grand R1 est dans cette forme de réalisation sensiblement de 125mm, tandis que le plus petit rayon R2 est sensiblement de 80mm, d'où un rapport de 1,56 entre les valeurs des deux rayons.

Ce rapport des rayons permet d'obtenir une propagation de la fissuration à partir de deux points de contrainte maximum A, B correspondant au début des flèches (fig.2), vers des points de contraintes minimum C,D correspondant à l'extrémité des flèches.

Ainsi, grâce à un rapport compris entre 1,2 et 1,8 entre le rayon le plus grand R1 et le rayon le plus petit R2 de la partie ellipsoïdale de la membrane à l'intérieur de la collerette, on obtient deux points de rupture ou de contraintes maximum A,B et une distribution présentant une décroissance monotone de contraintes le long de la forme oblongue, ce qui permet d'assurer une bonne maîtrise de la propagation de la fissuration le long de la ligne de raccordement.
En effet, deux points A,B de départ de fissure apparaissent aux deux points de contrainte maximum obtenus avec la forme oblongue de la membrane, cette même forme avec la ceinture d'épaisseur plus importante réalisée par la collerette 6, permet d'avoir une concentration de contraintes décroissantes, le long du périmètre de la membrane, permettant ainsi une propagation de la fissure tout le long du périmètre et ainsi l'obtention d' une section d'évacuation suffisante correspondant à la surface de la membrane à l'intérieur de la collerette 6.

La cuve 1 est fixée sur la structure d'une cellule moyenne tension (non représentée) par l'intermédiaire de moyens de fixation 8 prévus tout autour de la membrane 4, de manière que cette membrane ne soit sollicitée que par les variations de pression à l'intérieur de la cuve. Ainsi, la membrane est isolée davantage par rapport à son environnement.

Ainsi, grâce à la concentration de contraintes réalisée par l'invention, il n'est plus nécessaire de choisir un rayon de courbure R3 au niveau de la ligne de raccordement 7 compris entre 0 et 1 mm, ce qui garantissait auparavant une concentration de contraintes importante mais engendrait les inconvénients précédemment mentionnés. La dispersion sur la pression de rupture qui était entraînée par un tel choix est considérablement diminuée. Ainsi, on choisira de préférence un rayon de courbure supérieur ou égal à 1 mm, valeur à partir de laquelle les contraintes diminuent légèrement.

Ainsi, grâce à l'invention, on garantit un niveau de pression de rupture faible par le choix de l'épaisseur de la membrane et de sa surface subissant la pression, et par le fait que le rayon de raccordement est dimensionné à une valeur supérieure à 1 mm, lui permettant d'avoir une influence faible sur le niveau de pression, ce qui garantit une certaine stabilité de cette valeur du niveau de pression.

Les avantages de l'invention sont principalement d'avoir un seul paramètre influent, qui est l'épaisseur de la membrane, qui est réglable dans le moule, de sortir des préconisations de l'art antérieur qui consistaient à réaliser un rayon de courbure au niveau de la ligne de raccordement inférieur à 1mm pour favoriser la rupture, ce paramètre ayant un coefficient d'influence très fort et donc une très forte sensibilité aux dispersions et à l'usure du moule, et à tout autre type de défaut pouvant apparaître au cours de sa vie. L'obtention d'une faible pression de rupture permet de réaliser un gain important sur l'épaisseur des tôles pour la cheminée de canalisation des gaz de coupure d'arc, d'où un gain économique et en poids.

On a donc réalisé grâce à l'invention, un dispositif de limitation de la pression permettant de réduire fortement les paramètres influents, comme le rayon de fond et d'avoir une bonne maîtrise de la propagation des fissurations afin d'assurer la non dégradation de la cuve et le maintien des phases, tout en garantissant une section d'évacuation importante. L'invention permet donc de résoudre deux problèmes qui sont la dispersion des valeurs d'éclatement qu'il est nécessaire de réduire au minimum et la propagation de la fissuration le long de la zone de faiblesse. En effet, si cette fissure quitte ce pourtour il y a un risque d'éclatement de toute la cuve.

Bien entendu, l'invention n'est pas limitée au mode de réalisation décrit et illustré qui n'a été donné qu'à titre d'exemple.

## Revendications

1. Enveloppe isolante d'une cuve logeant un appareil de protection électrique, ladite enveloppe comportant un dispositif de limitation de la pression à l'intérieur de ladite enveloppe, ledit dispositif comportant une membrane laquelle, en présence d'un défaut d'arc interne à l'intérieur de ladite enveloppe entraînant une élévation brusque de la pression au-dessus d'une certaine valeur à l'intérieur de ladite enveloppe, est apte à créer, sous l'effet de cette augmentation de pression, un passage à travers la paroi de l'enveloppe, ce passage permettant un dégagement dirigé du plasma généré lors du défaut interne, cette membrane (4) étant de forme sensiblement ellipsoïdale,
**caractérisée en ce que** cette membrane présente un rapport compris entre 1,2 et 1,8 entre le plus grand rayon R1 et le plus petit rayon de courbure R2, ceci permettant d'obtenir deux points de rupture A,B correspondant à deux points de concentrations de contraintes maximales de la membrane (4) et ainsi une distribution décroissante progressive de contraintes à partir de ces deux points de rupture, le long de cette forme ellipsoïdale, **en ce que** cette membrane (4) est rattachée à l'enveloppe (2) par une collerette (6), **en ce que** le rapport entre l'épaisseur de la membrane (4) et l'épaisseur de la collerette (6), est compris entre 3 et 6, de manière à créer une concentration de contraintes au niveau de la ligne de raccordement (7) entre la membrane (4) et la collerette (6), et **en ce que** la membrane (4) et la collerette (6) précités sont venues de matière avec l'enveloppe isolante précitée (2).

2. Enveloppe isolante selon la revendication 1, **caractérisé en ce que** le plus grand rayon R1 est d'environ 125mm, tandis que le plus petit rayon R2 est d'environ 80 mm.

3. Enveloppe isolante selon la revendication 1 ou 2, **caractérisée en ce que** la collerette (6) entourant la membrane (4) présente une épaisseur d'environ 24mm, tandis que la membrane (4) présente une épaisseur d'environ 4mm.

4. Enveloppe isolante selon l'une quelconque des revendications 1 à 3, **caractérisé en ce que** la ligne de raccordement (7) entre la membrane (4) et la collerette (6) présente un rayon de courbure R3 minimum de 1mm.

5. Enveloppe isolante selon l'une quelconque des revendications précédentes, **caractérisé en ce que** l'enveloppe isolante (2) est configurée pour permettre de fixer la cuve (1) sur la structure d'une cellule moyenne tension par l'intermédiaire de moyens de fixation (8) prévus tout autour de la membrane (4), de manière que cette membrane (4) ne soit sollicitée mécaniquement que par les variations de pression à l'intérieur de la cuve (1).

6. Appareil de protection électrique comportant un dispositif de mise à la terre, ledit appareil comportant une enveloppe isolante (2), **caractérisé en ce que** ladite enveloppe (2) est une enveloppe isolante selon l'une quelconque des revendications précédentes.

## Patentansprüche

1. Isolierhülle eines Behälters, in dem ein elektrisches Schutzgerät untergebracht ist, wobei die Hülle eine Vorrichtung zur Begrenzung des Drucks innerhalb der Hülle aufweist, wobei die Vorrichtung eine Membran aufweist, die in Gegenwart eines inneren Lichtbogenfehlers im Inneren der Hülle, der eine abrupte Druckerhöhung über einen bestimmten Wert innerhalb der Hülle nach sich zieht, unter der Wirkung dieser Druckerhöhung einen Durchgang durch die Wand der Hülle erzeugen kann, wobei dieser Durchgang ein gelenktes Freisetzen des beim inneren Fehler erzeugten Plasmas ermöglicht, wobei diese Membran (4) im Wesentlichen ellipsenförmig ist,
**dadurch gekennzeichnet, dass** diese Membran ein Verhältnis zwischen 1,2 und 1,8 zwischen dem größten Radius R1 und dem kleinsten Krümmungsradius R2 aufweist, wobei dies ermöglicht, zwei Bruchstellen A,B, die zwei Stellen von Konzentrationen maximaler Beanspruchungen der Membran (4) entsprechen, und somit eine progressive abnehmende Verteilung von Beanspruchungen ausgehend von diesen zwei Bruchstellen entlang dieser Ellipsenform zu erhalten, dass diese Membran (4) an der Hülle (2) durch einen Kragen (6) befestigt ist, dass das Verhältnis zwischen der Dicke der Membran (4) und der Dicke des Kragens (6) zwischen 3 und 6 liegt, um eine Konzentration von Beanspruchungen im Bereich der Verbindungslinie (7) zwischen der Membran (4) und dem Kragen (6) zu erzeugen, und dass die erwähnten Membran (4) und Kragen (6) aus dem gleichen Material wie die erwähnte Isolierhülle (2) bestehen.

2. Isolierhülle nach Anspruch 1, **dadurch gekennzeichnet, dass** der größte Radius R1 etwa 125 mm beträgt, während der kleinste Radius R2 etwa 80 mm beträgt.

3. Isolierhülle nach Anspruch 1 oder 2, **dadurch gekennzeichnet, dass** der die Membran (4) umgebende Kragen (6) eine Dicke von etwa 24 mm hat, während die Membran (4) eine Dicke von etwa 4 mm hat.

4. Isolierhülle nach einem der Ansprüche 1 bis 3, **dadurch gekennzeichnet, dass** die Verbindungslinie (7) zwischen der Membran (4) und dem Kragen (6) einen Mindestkrümmungsradius R3 von 1 mm hat.

5. Isolierhülle nach einem der vorhergehenden Ansprüche, **dadurch gekennzeichnet, dass** die Isolierhülle (2) konfiguriert ist zu ermöglichen, den Behälter (1) an der Struktur einer Mittelspannungszelle mittels Befestigungseinrichtungen (8) zu befestigen, die um die ganze Membran (4) herum vorgesehen sind, damit diese Membran (4) mechanisch nur durch die Druckveränderungen innerhalb des Behälters (1) beaufschlagt wird.

6. Elektrisches Schutzgerät, das eine Erdungsvorrichtung aufweist, wobei das Gerät eine Isolierhülle (2) aufweist, **dadurch gekennzeichnet, dass** die Hülle (2) eine Isolierhülle nach einem der vorhergehenden Ansprüche ist.

## Claims

1. Insulating casing of a tank housing an electrical protection unit, said casing including a device for limiting the pressure inside said casing, said device including a diaphragm which, in the presence of an internal arc fault inside said casing leading to a sudden increase in the pressure above a certain value inside said casing, is capable of creating, under the effect of said increase in pressure, a passage through the wall of the casing, this passage allowing a directed release of the plasma generated during the internal fault, this diaphragm (4) being substantially ellipsoidal in shape,
**characterized in that** said diaphragm has a ratio comprised between 1.2 and 1.8 between the largest radius R1 and the smallest radius of curvature R2, this making it possible to obtain two breaking points A, B corresponding to two points of maximum stress concentration of the diaphragm (4) and thus a gradually decreasing distribution of stress from these two breaking points along this ellipsoidal shape, **in that** this diaphragm (4) is attached to the casing (2) by a collar (6), **in that** the ratio between the thickness of the diaphragm (4) and the thickness of the collar (6) is comprised between 3 and 6 so as to create a concentration of stress at the connecting line (7) between the diaphragm (4) and the collar (6), and **in that** the aforementioned diaphragm (4) and the aforementioned collar (6) are made as an integral part with the aforementioned insulating casing (2).

2. Insulating casing according to Claim 1, **characterized in that** the largest radius R1 is about 125 mm, while the smallest radius is about R2 is about 80 mm.

3. Insulating casing according to Claim 1 or 2, **characterized in that** the thickness of the collar (6) surrounding the diaphragm (4) is about 24 mm, while the thickness of the diaphragm (4) is about 4 mm.

4. Insulating casing according to any one of Claims 1 to 3, **characterized in that** the connecting line (7) between the diaphragm (4) and the collar (6) has a minimum radius of curvature R3 of 1 mm.

5. Insulating casing according to any one of the preceding claims, **characterized in that** the insulating casing (2) is configured to allow the tank (1) to be attached to the structure of a medium-voltage cell via attachment means (8) provided all around the diaphragm (4), such that this diaphragm (4) is mechanically stressed only by the pressure variations inside the tank (1).

6. Electrical protection unit including a grounding device, said unit including an insulating casing (2), **characterized in that** said casing (2) is an electrically insulating casing according to any one of the preceding claims.
